(19) **Europäisches Patentamt**

**European Patent Office**

**Office européen des brevets**

(11) **EP 0 657 402 B1**

(12) **FASCICULE DE BREVET EUROPEEN**

(45) Date de publication et mention
de la délivrance du brevet:
**02.09.1998 Bulletin 1998/36**

(51) Int. Cl.$^6$: **C04B 35/563**, G21C 7/24,
G21F 1/06

(21) Numéro de dépôt: **94402827.3**

(22) Date de dépôt: **08.12.1994**

(54) **Matériau composite absorbant les neutrons et son procédé de fabrication**

Neutronenabsorbierendes Verbundmaterial und Verfahren zu dessen Herstellung

Neutron absorbing composite material and process for its preparation

(84) Etats contractants désignés:
**BE DE ES GB**

(30) Priorité: **10.12.1993 FR 9314873**

(43) Date de publication de la demande:
**14.06.1995 Bulletin 1995/24**

(73) Titulaire:
**COMMISSARIAT A L'ENERGIE ATOMIQUE
75015 Paris (FR)**

(72) Inventeurs:
 • **Decroix, Guy-Marc
   F-94550 Chevilly-Larue (FR)**
 • **Noaillac, Danièle
   F-91400 Orsay (FR)**
 • **Chatillon, Jacques
   F-91370 Verrieres le Buisson (FR)**
 • **Fraslin, Yann
   F-44380 Pornichet (FR)**

(74) Mandataire:
**Dubois-Chabert, Guy et al
c/o BREVATOME
25, rue de Ponthieu
75008 Paris (FR)**

(56) Documents cités:
EP-A- 0 150 841    FR-A- 2 646 007
US-A- 4 027 377

## Description

La présente invention a pour objet un matériau composite absorbant les neutrons et son procédé de fabrication.

Un matériau de ce type peut être utilisé en particulier dans les réacteurs nucléaires tels que les réacteurs à eau pressurisée et les réacteurs à neutrons rapides.

Actuellement, le matériau absorbant neutronique le plus utilisé dans les réacteurs nucléaires est le carbure de bore $B_4C$ car c'est un matériau peu coûteux, dont on peut moduler l'efficacité en jouant à la fois sur sa teneur en isotope $^{10}B$ et sur sa densité, et qui a par ailleurs de bonnes propriétés d'inertie chimique et un caractère fortement réfractaire. Généralement, il est utilisé sous la forme de pastilles cylindriques empilées dans des gaines métalliques pour constituer les barres de commande des réacteurs.

Toutefois, il présente l'inconvénient d'avoir un mauvais comportement sous irradiation dû à de mauvaises propriétés thermomécaniques (faible conductivité thermique et caractère fragile) qui limitent sa durée de vie. Ainsi, le dégagement de chaleur dû aux captures neutroniques (n, alpha) suffit à induire sa fracturation car les gradients thermiques très importants (jusqu'à 1000°C/cm dans un réacteur nucléaire à neutrons rapides) qui en découlent, conduisent à l'établissement de contraintes excédant la résistance du matériau. Par ailleurs, la génération d'hélium en grande quantité entraîne un gonflement important du matériau et une fissuration microscopique qui peut se traduire à terme par une complète désagrégation des pastilles.

Les solutions actuellement retenues pour contourner ces difficultés, qui consistent à limiter l'utilisation du carbure de bore aux zones à faible flux dans les réacteurs à eau pressurisée, ou à insérer une chemise entre les pastilles de $B_4C$ et la gaine les contenant pour recueillir les fragments dans le cas des réacteurs nucléaires à neutrons rapides, ne constituent en fait que des pis-aller. Aussi, des recherches ont été entreprises pour développer des matériaux présentant un comportement sous irradiation meilleur que celui du carbure de bore, tout en conservant la plus forte efficacité d'absorption neutronique possible.

On sait que les propriétés thermomécaniques d'une céramique peuvent être améliorées en utilisant des processus de renforcement divers, tels que l'introduction en quantité importante d'une seconde phase formée de whiskers, de céramiques ou de métaux.

Dans le cas des whiskers, le renforcement est assuré par la forte contrainte à la rupture des whiskers. Dans le cas des céramiques, le renforcement est obtenu par l'existence de champs de contraintes résiduelles dans le matériau ou de fortes concentrations de microfissures qui empêchent la libre propagation des fissures par déflexion, dispersion, etc. Dans le cas des métaux, on utilise les propriétés de plasticité et de conductivité thermique du métal.

Ainsi, R. Rüh et al ont étudié dans J. Am. Ceram. Soc., 75(4), 1992, p. 864-872 et J. Am. Ceram. Soc., 75(10), 1992, p. 2887-2890, l'influence de l'addition de nitrure de bore sur la conductivité thermique du carbure de bore dans des matériaux composites à base de carbure de bore et de nitrure de bore, préparés par compression à chaud d'un mélange de poudres de $B_4C$ et de BN de granulométrie inférieure à 30μm, soumises de plus à un broyage.

Le document US-A-4 661 155 décrit un matériau composite comprenant du carbure de bore et une phase métallique de liaison constituée de molybdène, pour des outils d'usinage de métaux, céramiques et verres. Ce matériau est préparé par compression à chaud d'un mélange homogène de poudres de Mo et de $B_4C$.

Les matériaux composites décrits ci-dessus ont des microstructures qui correspondent à une dispersion homogène de particules fines de BN ou de Mo dans une matrice de $B_4C$ à grains fins. Cette structure conduit à de meilleures propriétés de résistance à la rupture que celles du $B_4C$ seul, mais le comportement sous contrainte du matériau reste néanmoins de type fragile alors qu'il serait intéressant d'obtenir un comportement sous contrainte de type pseudoplastique dans le cas des matériaux absorbants neutroniques utilisés dans les réacteurs nucléaires ; le composite peut certes se fissurer, mais il garde néanmoins son intégrité.

Le document EP-A-0 150 841 décrit un matériau absorbant les neutrons comprenant du carbure de bore et du carbure de silicium. Ce matériau est obtenu à partir d'un mélange de poudres céramiques à grains fins.

La présente invention a précisément pour objet un matériau composite absorbant les neutrons, qui présente des propriétés améliorées par rapport à celles des matériaux connus à base de $B_4C$ grâce au choix d'une matrice céramique et d'un renforcement approprié.

Selon l'invention, le matériau composite absorbant les neutrons comprend une matrice homogène d'un premier composant constitué par une matière céramique dans laquelle sont dispersés de façon homogène des amas d'au moins un second composant choisi parmi les métaux réfractaires, les borures de molybdène et $B_4C$, l'un au moins des deux composants comprenant du bore et les amas du second composent ayant des dimensions de 100 à 500 μm.

Le matériau de l'invention est ainsi un matériau composite du type céramique/céramique ou céramique/métal dans lequel le renforcement est assuré par les amas de borure de molybdène, de carbure de bore et/ou de métal réfractaire.

Le renforcement dû à ces amas provient de l'existence de champs de contrainte résiduels dans le matériau qui conduisent à une déflexion des fissures , de la présence d'une interface faible entre l'amas et la matrice qui constitue un chemin privilégié pour une fissure, ou du pontage de la fissure (forces de fermeture) pour les amas (ductiles) les plus gros qui empêchent la libre propagation des fissures.

Pour obtenir ces résultats, il est donc important que les amas aient des dimensions appropriées; généralement ce sont des amas pseudosphériques dont les dimensions se situent dans la gamme de 100 à 500µm.

Par ailleurs, le matériau doit contenir une quantité suffisante d'amas.

Lorsque les amas sont en métal réfractaire, ils sont calibrés ; leur quantité ne doit pas être trop importante pour ne pas nuire à l'efficacité d'absorption neutronique du matériau. Dans ce cas, la quantité de métal réfractaire est généralement au plus égale à 30 % en volume du matériau.

Dans le cas où les amas sont en carbure de bore, ils sont calibrés ou non et représentent de préférence la majeure partie du matériau, soit 60 à 80 % en volume de celui-ci.

Dans le matériau composite de l'invention, les métaux réfractaires susceptibles d'être utilisés sont les métaux ayant une température de fusion supérieure à 2200°C. A titre d'exemple de tels métaux, on peut citer l'hafnium, le zirconium et le molybdène, en particulier le molybdène car il est très réfractaire, sa température de fusion étant de 2600°C, et présente une excellente conductivité thermique.

Les matières céramiques susceptibles d'être utilisées pour former la matrice du matériau composite sont de préférence des matières céramiques comprenant du bore, en particulier les matières céramiques constituées par $B_4C$ et BN.

Aussi, selon un premier mode de réalisation de l'invention, la matrice céramique est du $B_4C$, et on utilise des amas calibrés en molybdène et/ou borure de molybdène, car ils possèdent des propriétés remarquables avec cette matrice.

En effet, avec le carbure de bore, le molybdène est particulièrement intéressant, car outre sa haute réfractarité et son excellente conductivité thermique, il présente une faible compatibilité chimique avec $B_4C$, une bonne compatibilité chimique avec le carbone et un coefficient de dilatation thermique supérieur à celui de $B_4C$.

La faible compatibilité chimique avec $B_4C$ est intéressante, car elle conduit à une diffusion du bore vers le molybdène, qui constitue un facteur favorable au renforcement (interface faible de carbone libre entre amas et matrice).

La bonne compatibilité chimique avec le carbone permet d'utiliser pour la fabrication du matériau composite les mêmes procédés que ceux retenus pour $B_4C$ ; la rapidité de la boruration du molybdène entrave la réaction

$$Mo+C \rightarrow MoC.$$

Le coefficient de dilatation thermique supérieur à celui de $B_4C$ permet l'établissement de contraintes résiduelles favorables au renforcement.

Avec cette matrice en carbure de bore $B_4C$ contenant des amas calibrés à base de molybdène, on obtient un matériau composite à grains fins avec une dispersion homogène de la matrice de carbure de bore et une répartition homogène des amas sphériques dans la matrice. Avec le molybdène, on obtient de plus une porosité résiduelle dans les amas de molybdène et une disparition partielle ou totale du molybdène qui donne place à des borures tels que $Mo_2B_5$ du fait de la diffusion du bore de la matrice $B_4C$ vers l'amas de molybdène entraînant la présence d'une interface de carbone amorphe entre la matrice et l'amas.

Le renforcement est alors assuré par l'aspect ductile des amas ainsi que par la déflexion des fissures (interphase faible du fait de la diffusion du bore du $B_4C$ vers Mo).

Selon un second mode de réalisation de l'invention, la matrice céramique est du nitrure de bore BN et les amas sont des amas calibrés ou non de $B_4C$.

Avec cette structure, on obtient également un matériau à grains fins, une dispersion homogène de la matrice de nitrure de bore et une répartition homogène des amas de carbure de bore avec de bonnes propriétés thermomécaniques.

Les matériaux composites de l'invention peuvent être préparés par métallurgie des poudres à partir d'une poudre du premier composant et d'amas calibrés ou non du (des) second(s) composant(s).

Aussi, l'invention a également pour objet un procédé de préparation de ce matériau composite absorbant neutronique, qui consiste à mélanger de façon homogène une poudre du premier composant ayant une granulométrie moyenne inférieure à 5µm avec des amas du ou des second(s) composant(s), et à densifier ensuite le mélange par frittage sous pression à une température et pendant une durée suffisantes pour obtenir une densité finale au moins égale à 90% de la densité théorique.

Les amas calibrés ou non du second composant peuvent être préparés à partir d'une poudre très fine du second composant, ayant par exemple une granulométrie inférieure à 5µm, en soumettant la poudre à une cuisson sous vide ou sous atmosphère neutre, par exemple à une température supérieure à 1000°C, puis en broyant le produit cuit et en tamisant le produit broyé de façon à ne conserver que les amas de taille désirée, par exemple de 100 à 500µm (dans le cas où ils sont calibrés).

Pour la cuisson, la température est choisie en fonction de la granulométrie initiale de la poudre et de façon à ce que le broyage subséquent soit aisé.

Pour la poudre du premier composant, on peut obtenir une poudre homogène en dispersant une poudre de ce premier composant, de façon aussi homogène que possible, par exemple par application d'ultrasons, dans une barbotine, et en séchant et tamisant ensuite la poudre.

Pour mélanger ensuite cette poudre avec les amas calibrés ou non, on peut utiliser des techniques de mélange classiques.

On peut réaliser ensuite la densification du mélange par compression uniaxiale à chaud ou par compression isostatique à chaud, en utilisant dans le premier cas une matrice en graphite et dans le deuxième cas une enveloppe en métal réfractaire, par exemple en titane. La pression, la température et la durée du frittage sont choisies en fonction de la matière céramique utilisée pour obtenir la densité finale voulue au moins égale à 90% de la densité théorique.

Lorsque la matière céramique est du carbure de bore, la pression de frittage est généralement de 20 à 200 MPa, la température de frittage est généralement dans la gamme allant de 1800 à 2200°C et la durée du frittage peut être de 15 minutes à 1 heure.

Lorsque la matière céramique est du nitrure de bore BN, la pression de frittage peut être de 20 à 200 MPa, la température de frittage peut être dans la gamme allant de 1800 à 2200°C. La durée du frittage peut être de 15 min. à 1 h.

L'invention sera mieux comprise à la lecture des exemples qui suivent donnés bien entendu à titre illustratif et non limitatif, en référence aux dessins annexés sur lesquels :

- la figure 1 est une micrographie illustrant la structure d'un matériau composite absorbant comportant une matrice de $B_4C$ renforcée par des amas calibrés de Mo,
- la figure 2 est une micrographie illustrant la structure d'un matériau composite absorbant comportant une matrice de BN renforcée par des amas non calibrés de $B_4C$,
- la figure 3 est une micrographie illustrant la structure d'un matériau composite comportant une matrice de BN renforcée par des amas calibrés de $B_4C$, et
- les figures 4 et 5 sont des diagrammes représentant le comportement contrainte-déformation de matériaux conformes à l'invention et de matériaux conformes à l'art antérieur.

**Exemple 1: Préparation d'un matériau composite à matrice de $B_4C$ renforcé par des amas calibrés de Mo.**

On part d'une poudre de $B_4C$ ayant une granulométrie inférieure à 5 $\mu$m et on disperse cette poudre de façon aussi homogène que possible, par exemple par application d'ultrasons, dans une barbotine d'alcool puis on la sèche et on la tamise.

On prépare par ailleurs des amas calibrés de Mo à partir d'une poudre de Mo ayant une granulométrie inférieure à 5$\mu$m. On introduit cette poudre dans un moule en graphite et on la cuit sous vide à une température de 1200°C pendant 1 h On soumet ensuite le produit cuit à un broyage et un tamisage pour retenir les amas ayant une granulométrie de 100 à 500 $\mu$m.

On mélange ensuite la poudre de carbure de bore avec les amas calibrés de Mo ainsi préparés de façon à ce que la quantité de Mo représente 20 % en volume du mélange.

On prépare ensuite à partir du mélange des pastilles d'un diamètre de 17 mm et d'une hauteur de 30 mm en introduisant le mélange dans un moule en graphite et en effectuant une compression uniaxiale dans un four à une température de 2100°C sous une pression de 60MPa pendant 1 heure. On obtient ainsi une pastille de matériau composite comprenant une matrice de carbure de bore renforcée par des amas calibrés de Mo qui ont été transformés au moins en partie lors du frittage en borure de molybdène.

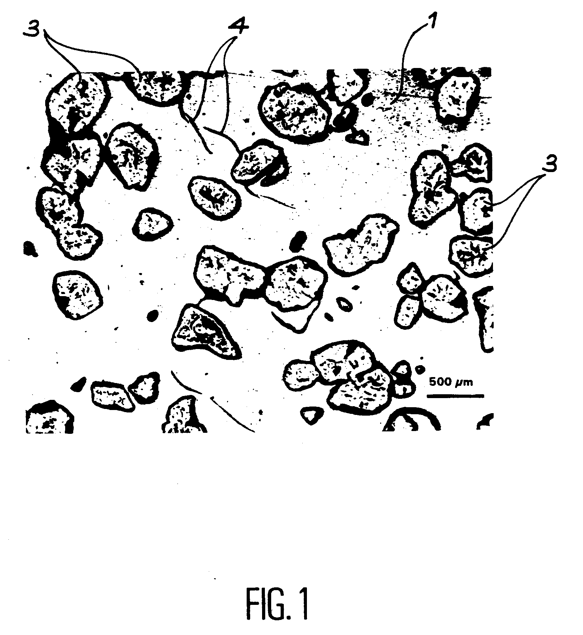

La figure 1 est une micrographie du matériau obtenu, à un grossissement de 20. Sur cette figure, on remarque la matrice 1 de $B_4C$ dans laquelle sont dispersés de façon homogène des amas 3 calibrés à base de Mo, en fait de borures de molybdène. Le trait noir autour de ces amas représente l'interface faible de carbone. La présence de contraintes résiduelles dans le matériau se traduit par des microfissures 4

**Exemple 2: Elaboration d'un matériau composite à matrice de nitrure de bore (BN) renforcé par des amas non calibrés (conglomérats) de $B_4C$.**

On part d'une poudre de BN et d'une poudre de $B_4C$ ayant des granulométries inférieures à 5$\mu$m.

Les poudres de $B_4C$ et de BN sont tamisées à environ 150$\mu$m (100 à 300$\mu$m) puis mélangées, la quantité de BN étant de 30 % en volume.

Le mélange est alors densifié par frittage sous charge (uniaxiale ou isostatique) à 2100°C sous 60MPa pendant 1h, pour obtenir une densité finale supérieure à 90 %.

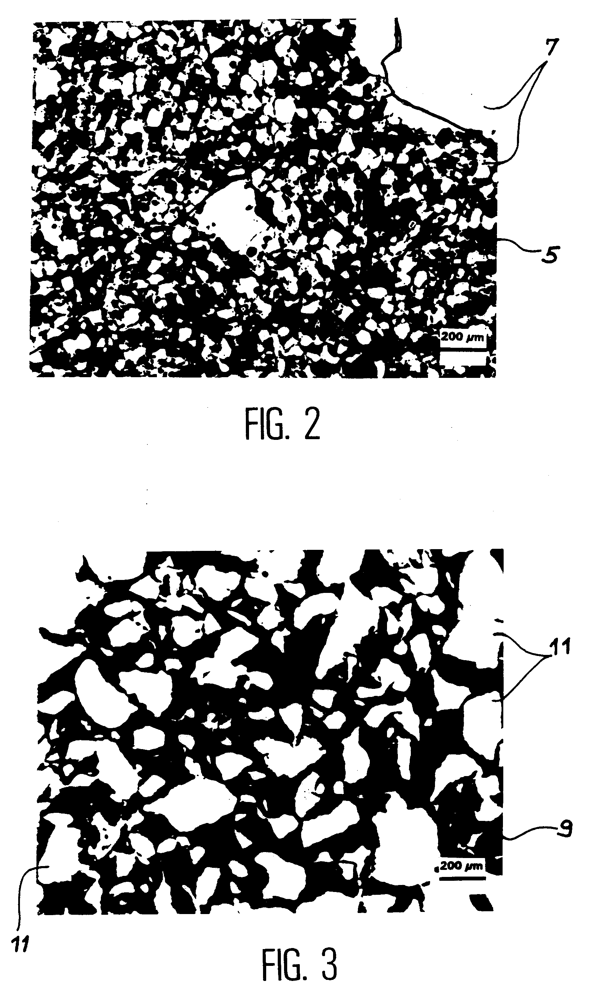

La figure 2 représente la microstructure du matériau obtenu avec un grossissement de 20. Sur cette figure, on voit que le matériau comprend une matrice de nitrure de bore 5 dans laquelle sont répartis des conglomérats de $B_4C$ 7 plus ou moins gros, qui sont obtenus, dans ce cas, de façon naturelle par tamisage.

**Exemple 3: Préparation d'un matériau composite comprenant une matrice de BN dans laquelle sont répartis de façon homogène des amas calibrés de $B_4C$.**

On suit le même mode opératoire que dans l'exemple 1, sauf que dans ce cas, on forme des amas pseudosphériques calibrés à partir de la poudre de $B_4C$ et que l'on traite la poudre de BN qui a une granulométrie inférieure à 5$\mu$m, comme la poudre de $B_4C$ dans l'exemple 1.

On mélange ensuite la poudre de BN avec les amas calibrés de $B_4C$, de façon à ce que la quantité de BN soit de 20 % en volume du mélange.

On prépare ensuite à partir du mélange des pastilles d'un diamètre de 17 mm et d'une hauteur de 25 mm en introduisant le mélange dans un moule en graphite et en effectuant une compression uniaxiale du mélange dans un four à une température de 2100°C sous une pression de 60 MPa pendant 1 heure.

La figure 3 représente la microstructure du matériau obtenu. Sur cette figure, on voit la matrice 9 de BN à l'intérieur de laquelle sont dispersés les amas calibrés 11 de $B_4C$.

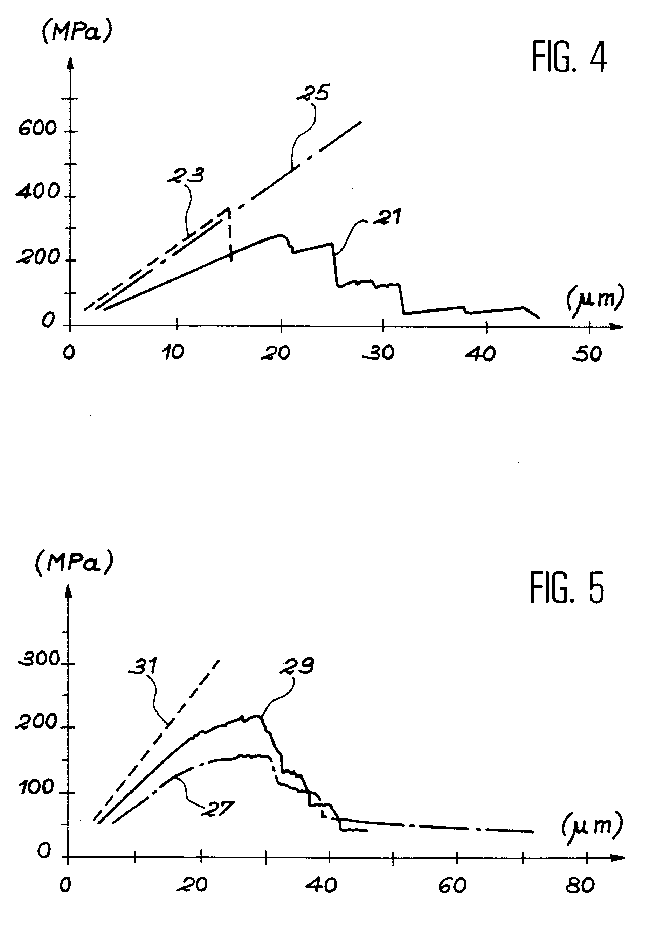

Les matériaux composites des exemples 1 à 3 ont montré une résistance à la fracturation par choc thermique plus de deux fois plus élevée que celle d'un carbure de bore pur de même densité relative ; de même, la diffusivité thermique des composites est bien supérieure à celle du carbure de bore. Enfin, leurs propriétés mécaniques, relativement à $B_4C$, sont extrêmement favorables car leur module d'élasticité apparent est deux fois plus faible et leur comportement sous contrainte est bien meilleur comme on peut le voir sur les figures 4 et 5.

Sur la figure 4, on a représenté le comportement à la déformation du matériau composite de l'exemple 1, soit la déformation (en micromètres) en fonction de la contrainte appliquée (en MPa). Au vu de cette figure, on remarque que le matériau composite de l'invention (courbe 21) a un comportement pseudoplastique sans rupture. En revanche, la courbe 23 qui se rapporte à du $B_4C$ pur testé dans les mêmes conditions montre une rupture à 350 MPa et la courbe 25 qui se rapporte à un matériau homogène $B_4C$-Mo préparé à partir de poudres de $B_4C$ et de Mo ayant des granulométries très faibles, illustre le comportement fragile de ce matériau.

Sur la figure 5, on a représenté le comportement sous contrainte des matériaux composites obtenus dans les exemples 2 et 3. La courbe 27 se réfère à l'exemple 3, la courbe 29 se réfère à l'exemple 2 et la courbe 31 se réfère à un matériau formé par métallurgie des poudres, à partir d'un mélange homogène de $B_4C$ et de BN ayant des granulométries faibles sensiblement identiques.

Au vu de cette figure, on remarque un comportement fragile dans le cas du matériau $B_4C$-BN homogène et un comportement pseudoplastique des matériaux des exemples 2 et 3.

Ainsi les matériaux composites de l'invention présentent des propriétés nettement améliorées par rapport à celles de $B_4C$ pur et des matériaux composites de $B_4C$-Mo ou $B_4C$- BN de l'art antérieur.

## Revendications

1. Matériau composite absorbant les neutrons comprenant une matrice homogène d'un premier composant constitué par une matière céramique dans laquelle sont dispersés de façon homogène des amas d'au moins un second composant choisi parmi les métaux réfractaires, les borures de moly- bdène et $B_4C$, l'un au moins des deux composants comprenant du bore, et les amas du second composant ayant des dimensions de 100 à 500$\mu$m.

2. Matériau selon la revendication 1, caractérisé en ce que le métal réfractaire est choisi parmi Mo, Hf et Zr.

3. Matériau selon l'une quelconque des revendications 1 et 2, caractérisé en ce que le second composant est un métal réfractaire et/ou un borure de molybdène, en ce que les amas sont des amas calibrés et en ce que le matériau comprend au plus 30 % en volume du second composant.

4. Matériau selon la revendication 3, caractérisé en ce que la matière céramique est du carbure de bore et en ce que les amas calibrés sont des amas de Mo et/ou de borure de molybdène.

5. Matériau selon la revendication 1, caractérisé en ce que les amas sont en $B_4C$ et représentent 60 % à 80 % en volume du matériau.

6. Matériau selon l'une quelconque des revendications 1 et 6, caractérisé en ce que la matière céramique est du nitrure de bore et en ce que les amas sont des amas de $B_4C$ calibrés ou non.

7. Procédé de préparation d'un matériau composite selon l'une quelconque des revendications 1 à 6, caractérisé en ce que l'on mélange de façon homogène une poudre du premier composant ayant une granulométrie moyenne inférieure à 5$\mu$m avec des amas du (des) second(s) composant(s), et on densifie ensuite le mélange par frittage sous pression à une température et pendant une durée suffisantes pour obtenir une densité finale au moins égale à 90 % de la densité théorique.

8. Procédé selon la revendication 7, caractérisé en ce que l'on prépare les amas calibrés ou non du second composant à partir d'une poudre fine du second composant, par cuisson sous vide ou sous atmosphère neutre de la poudre, suivie d'un broyage et d'un tamisage pour séparer les amas ayant une dimension de 100 à 500$\mu$m.

9. Procédé selon l'une quelconque des revendications 7 et 8, caractérisé en ce que l'on réalise le frittage par compression uniaxiale à chaud.

10. Procédé selon l'une quelconque des revendications 7 et 8, caractérisé en ce que l'on réalise le frittage par compression isostatique à chaud.

11. Procédé selon l'une quelconque des revendications 7 à 10, caractérisé en ce que le premier composant

est $B_4C$ et en ce que le second composant est Mo.

12. Procédé selon l'une quelconque des revendications 7 à 10, caractérisé en ce que le premier composant est BN et en ce que le second composant est $B_4C$.

13. Procédé selon la revendication 11, caractérisé en ce que la pression de frittage est de 20 à 200 MPa, la température de frittage est de 1800 à 2200°C, et la durée du frittage est de 15 min à 1h.

14. Procédé selon la revendication 12, caractérisé en ce que la pression de frittage est de 20 à 200 MPa, la température de frittage est de 1800 à 2200°C et la durée du frittage est de 15 min. à 1 heure.

**Claims**

1. Neutron-absorbing composite material incorporating a homogeneous matrix of a first component constituted by a ceramic in which are homogeneously dispersed clusters of at least one second component chosen from refractory metals, molybdenum borides and $B_4C$, at least one of the two components incorporating boron and the clusters of the second component having the dimensions 100 to 500 $\mu$m.

2. Material according to claim 1, characterized in that the refractory metal is chosen from among Mo, Hf and Zr.

3. Material according to either of the claims 1 and 2, characterized in that the second component is a refractory metal and/or a molybdenum boride, in that the clusters are calibrated clusters and in that the material also comprises 30% by volume of the second component.

4. Material according to claim 3, characterized in that the ceramic is boron carbide and in that the calibrated clusters are clusters of Mo and/or molybdenum.

5. Material according to claim 1, characterized in that the clusters are $B_4C$ and represent 60 to 80% by volume of the material.

6. Material according to either of the claims 1 and 6, characterized in that the ceramic is a boron nitride and that the clusters are calibrated or uncalibrated $B_4C$ clusters.

7. Process for the preparation of a composite material according to any one of the claims 1 to 6, characterized in that homogeneous mixing takes place of a powder of the first component having an average grain size below 5 $\mu$m with clusters of the second component or components and the mixture is then densified by sintering under pressure at a temperature and for a time adequate to obtain a final density at least equal to 90% of the theoretical density.

8. Process according to claim 7, characterized in that the calibrated or uncalibrated clusters of the second component are prepared from a fine powder of the second component, by baking in vacuo or under a neutral atmosphere of the powder, followed by grinding and screening to separate the clusters having a size between 100 and 500 $\mu$m.

9. Process according to either of the claims 7 and 8, characterized in that sintering takes place by hot uniaxial compression.

10. Process according to either of the claims 7 and 8, characterized in that sintering takes place by hot isostatic compression.

11. Process according to any one of the claims 7 to 10, characterized in that the first component is $B_4C$ and the second component is Mo.

12. Process according to any one of the claims 7 to 10, characterized in that the first component is BN and the second is $B_4C$.

13. Process according to claim 11, characterized in that the sintering pressure is 20 to 200 mPa, the sintering temperature 1800 to 2200°C and the sintering time 15 to 60 min.

14. Process according to claim 12, characterized in that the sintering pressure is 20 to 200 mPa, the sintering temperature 1800 to 2200°C and the sintering time 15 to 60 min.

**Patentansprüche**

1. Neutronenabsorbierendes Verbundmaterial, eine homogene Matrix einer ersten, durch ein keramisches Material gebildeten Komponente umfassend, in der in homogener Weise Anhäufungen von wenigstens einer zweiten Komponente verteilt sind, ausgewählt unter den refraktären Metallen, den Molybdänboriden und $B_4C$, wobei wenigstens eine der beiden Komponenten Bor enthält und die Anhäufungen der zweiten Komponente Abmessungen von 100 bis 500$\mu$m aufweisen.

2. Material nach Anspruch 1, dadurch gekennzeichnet, das man das refraktäre Metall unter Mo, Hf und Zr auswählt.

3. Material nach einem der Ansprüche 1 und 2, dadurch gekennzeichnet, daß die zweite Komponente ein refraktäres Metall und/oder ein Molybdänborid ist, daß die Anhäufungen kalibrierte Anhäufungen sind und daß das Material wenigstens 30 Volumenprozent der zweiten Komponente enthält.

4. Material nach Anspruch 3, dadurch gekennezeichnet, daR das keramische Material Borkarbid ist und daß die kalibrierten Anhäufungen aus Mo und/oder Molybdänborid sind.

5. Material nach Anspruch 1, dadurch gekennzeichnet, daß das keramische Material Borkarbid ist und daß die kalibrierten Anhäufungen aus $B_4C$ sind und 60 bis 80 Volumenprozent des Materials ausmachen.

6. Material nach einem der Ansprüche 1 und 6, dadurch gekennzeichnet, daß das keramische Material Bornitrid ist und daß die Anhäufungen $B_4C$-Anhäufungen sind, kalibriert oder nicht.

7. Herstellungsverfahren eines Verbundmaterials nach einem der Ansprüche 1 bis 6, dadurch gekennzeichnet, daß man ein Pulver der ersten Komponente einer mittleren Granulometrie bzw. Korngröße unter 5µm mit Anhäufungen der zweiten Komponente(n) mischt und die Mischung anschließend bei ausreichender Temperatur und Dauer durch Drucksintern verdichtet, um eine Enddichte von wenigstens gleich 90% der theoretischen Dichte zu erhalten.

8. Verfahren nach Anspruch 7, dadurch gekennzeichnet, daß man die Anhäufungen, kalibriert oder nicht, der zweiten Komponente aus einem feinen Pulver der zweiten Komponente herstellt, durch Brennen des Pulvers im Vakuum oder in neutraler Atmosphäre, gefolgt von einem Mahlen und einem Sieben, um die Anhäufungen mit einer Abmessung von 100 bis 500µm zu separieren.

9. Verfahren nach einem der Ansprüche 7 und 8, dadurch gekennzeichnet, daß das Sintern durch uniaxiales Warmpressen erfolgt.

10. Verfahren nach einem der Ansprüche 7 und 8, dadurch gekennzeichnet, daß das Sintern durch isostatisches Warmpressen erfolgt.

11. Verfahren nach einem der Ansprüche 7 bis 10, dadurch gekennzeichnet, daß die erste Komponente $B_4C$ ist und daß die zweite Komponente Mo ist.

12. Verfahren nach einem der Ansprüche 7 bis 10, dadurch gekennzeichnet, daß die erste Komponente BN ist und daß die zweite Komponente $B_4C$ ist.

13. Verfahren nach Anspruch 11, dadurch gekennzeichnet, daß der Sinterdruck 20 bis 200 MPa, die Sintertemperatur 1800 bis 2200 °C und die Sinterdauer 15min bis 1h beträgt.

14. Verfahren nach Anspruch 12, dadurch gekennzeichnet, daß der Sinterdruck 20 bis 200 MPa, die Sintertemperatur 1800 bis 2200 °C und die Sinterdauer 15min bis 1h beträgt.

FIG. 1

FIG. 2

FIG. 3

FIG. 4

FIG. 5